# EUROPÄISCHE PATENTSCHRIFT

(11) **EP 3 016 842 B1**
(45) Veröffentlichungstag und Bekanntmachung des Hinweises auf die Patenterteilung: **19.12.2018**
(21) Anmeldenummer: 14729875.6
(22) Anmeldetag: 22.05.2014
(51) Int. Cl.: B65G 41/00, B65G 43/00, B62D 65/18

(54) **ÜBERFLURFÖRDEREINRICHTUNG MIT SICHERUNGSELEMENT**
OVERHEAD CONVEYING DEVICE HAVING A SECURING ELEMENT
CONVOYEUR AÉRIEN ÉQUIPÉ D'UN ÉLÉMENT DE SÉCURITÉ

(30) Priorität: 05.07.2013 DE 102013213223
(43) Veröffentlichungstag der Anmeldung: 11.05.2016
(73) Patentinhaber: Hösker, Torsten, 74706 Osterburken (DE)
(72) Erfinder: Hösker, Torsten, 74706 Osterburken (DE)
(74) Vertreter: advotec.
(86) Internationale Anmeldenummer: PCT/EP2014/060534
(87) Internationale Veröffentlichungsnummer: WO 2015/000636

(56) Entgegenhaltungen:
- EP-A1- 2 340 982
- EP-A1- 2 340 982
- DE-A1- 3 607 020
- DE-A1- 19 806 963
- DE-A1- 19 806 963
- DE-A1-102007 009 783
- DE-A1-102012 214 127
- DE-T2- 60 202 985
- DE-T2- 60 202 985
- DE-U1-202005 015 118
- DE-U1-202009 006 856
- DE-U1-202009 006 856
- JP-A- 2003 341 818
- JP-A- 2003 341 818
- JP-A- 2008 222 137
- JP-A- 2008 222 137

## Beschreibung

Die Erfindung betrifft eine Überflurfördereinrichtung zur Integration in einer Montageanlage, die zum Transport von Fahrzeugkomponenten geeignet ist, nach dem Oberbegriff des Anspruchs 1.

In Montageanlagen zur Herstellung von Fahrzeugen werden verschiedene Arten von Fördereinrichtungen sowie Überflurfördereinrichtungen eingesetzt. Die JP2003 341818 A beschreibt eine solche Fördereinrichtung zur Förderung von Fahrzeugteilen mit verschiedenen Tragteilen, die entsprechend jeweils eine vorgegebene Standardlänge aufweisen.

Aufgrund der zum jeweils herzustellenden Fahrzeug individuell abgestimmten Montageanlagen und hieran ausgerichteten Fördereinrichtungen, werden entsprechend die betrachteten Überflurfördereinrichtungen individuell ausgeführt und hergestellt. Eine Überflurfördereinrichtung der vorliegenden Art betrifft hierbei diejenigen Fördereinrichtungen, unterhalb deren zumindest soviel freier Bewegungsraum verbleibt, dass eine Person ungehindert darunter laufen kann. In aller Regel wird hierbei eine freie Durchgangshöhe von mindestens 2,5 m oder mehr angestrebt, so dass ebenso Gabelstapler oder andere Transportfahrzeuge die Überflurfördereinrichtung unterqueren können. Ebenso werden entsprechende Überflurfördereinrichtungen eingesetzt, um einen zusätzlichen Montageraum zu gewinnen, wobei unter der Überflurfördereinrichtung auf dem Boden stehend eine weitere Fördereinrichtung oder eine sonstige Montageeinlage, beispielsweise ein Montageroboter, angeordnet werden kann. Zur Integration entsprechender Überflurfördereinrichtungen in eine gesamte Montageanlage in einem Gebäude ist es im Stand der Technik üblich, ein Traggerüst zur Aufstellung der eigentlichen Fördereinrichtung vor Ort im Gebäude aus Stahlträgern oder dergleichen zusammenzubauen, wobei ein aller Regel die Streben und Pfeiler baustellenseitig miteinander verschweißt werden. Dies gestattet die Anpassung an die vorliegenden Verhältnisse sowohl hinsichtlich der Montageanlagen als auch hinsichtlich der Gebäudemöglichkeiten und insbesondere können bereits vorhandene Montageanlagen oder Gebäudeeinbauten Berücksichtigung finden.

Die gattungsgemäße Überflurfördereinrichtung ist zunächst einmal bestimmt zur Integration in einer Montageanlage zum Transport von Fahrzeugkomponenten. Um welche Art von Fahrzeugkomponenten es sich hierbei handelt, ist ohne Belang. Wesentlich ist, dass die Überflurfördereinrichtung in einem gesamten Montagekonzept eingebunden wird und hierbei die Herstellung eines Fahrzeugs durch den Transport der zugewiesenen Fahrzeugteile ermöglicht. Hierzu weist die Überflurfördereinrichtung ein Traggerüst und zumindest eine Fördereinrichtung auf.

Gattungsgemäß weist das Traggerüst eine Länge von mehr als 5 m und eine Breite von mehr als 2 m auf. In welcher Höhe das Traggerüst der Überflurfördereinrichtung über dem Boden des bestimmungsgemäßen Gebäudes angebracht wird, ist für die vorliegende Erfindung ohne Belang, jedoch wird die freie Durchgangshöhe unterhalb des Traggerüstes zumindest 2 m betragen, um eine taugliche Nutzhöhe unterhalb des Traggerüsts zu gewährleisten. Das Traggerüst seinerseits wird hierbei von längsgerichteten und/oder quergerichteten oder diagonal miteinander verbundenen Tragbalkenelemente realisiert. Die Tragbalkenelemente sind hierbei in aller Regel stabartig ausgeführt und können sowohl Rohrprofile, T-Träger oder sonstige Formate aufweisen und hierbei sowohl als Zug-, Druck- oder Biegeträger ausgelegt sein.

Die zugehörige Fördereinrichtung ist hierbei auf dem Traggerüst montiert und ermöglicht einen Transport entsprechender Fahrzeugkomponenten, wobei der Transport in aller Regel entlang der Längsrichtung der Überflurfördereinrichtung vonstatten geht.

Weiterhin umfasst das Traggerüst Lagerungsmittel, auf denen die Überflurfördereinrichtung in der Montageanlage gelagert wird. Ob es sich hierbei um Festlager, Loslager oder sonstige Lagerungsarten handelt, ist zunächst ohne Belang. Zumindest stützt sich das Traggerüst im Wesentlichen in Richtung der Schwerkraft an den Lagerungsmitteln auf und von der Montageanlage bzw. dem Gebäude bereitgestellten Gegenlagern ab.

Von Nachteil bei der aus dem Stand der Technik bekannten Ausführung einer Überflurfördereinrichtung ist die mangelnde Absturzsicherung im Bereich des Traggerüsts bei Durchführung von Wartungsarbeiten.

Aufgrund ihrer Funktion für den Transport von Fahrzeugkomponenten weisen die Traggerüste am Anfangsquerschnitt der Eingabestelle bzw. am Endquerschnitt der Ausgabestelle keine Absturzsicherung auf, da ansonsten der Materialfluss in den Förderkorridor hinein bzw. aus dem Förderkorridor heraus nicht möglich wäre. Diese fehlende Absturzsicherung im Bereich der Eingabestelle bzw. der Ausgabestelle bedeutet dann eine hohe Unfallgefahr, wenn Wartungspersonal zu Wartungsarbeiten den Förderkorridor betreten muss. Denn der Förderkorridor befindet sich bei gattungsgemäßen Überflurfördereinrichtungen in signifikanter Höhe. Die Unterkante des Förderkorridors befindet sich nämlich üblicherweise 3 bis 4 m über dem Boden der Montagehalle. Stürzt nun das Wartungspersonal aus dieser Höhe auf den Boden der Montagehalle, so kann dies zu erheblichen Verletzungen führen. Die Absturzsicherung bekannter Überflurfördereinrichtungen ist somit nur unvollständig.

Aufgabe der vorliegenden Erfindung ist es daher, den Aufbau einer Überflurfördereinrichtung in einer Montageanlage zur Vermeidung der beschriebenen Nachteile zu verbessern.

Diese Aufgabe wird durch eine Überflurfördereinrichtung nach der Lehre des Anspruchs 1 gelöst.

Vorteilhafte Ausführungsformen der Erfindung sind Gegenstand der Unteransprüche.

Grundgedanke der erfindungsgemäßen Überflurfördereinrichtung ist es, dass an der Eingabestelle und/oder der Ausgabestelle des Traggerüsts ein Sicherungselement vorgesehen ist. Dieses Sicherungselement kann zwischen einer Sicherungsstellung und einer Öffnungsstellung verstellt werden. In der Sicherungsstellung wirkt das Sicherungselement als Absturzsicherung. Dazu werden der Anfangsquerschnitt und/oder der Endquerschnitt des Förderkorridors an der Eingabestelle und/oder der Ausgabestelle durch das Sicherungselement zumindest teilweise versperrt. Das Maß der Absperrung des Förderkorridors durch das Sicherungselement ist dabei so auszulegen, dass ein Absturz des Wartungspersonals bei der Durchführung von Wartungsarbeiten im Förderkorridor zuverlässig ausgeschlossen ist.

Um den reibungslosen Materialfluss durch den Anfangsquerschnitt in den Förderkorridor hinein bzw. durch den Endquerschnitt aus dem Förderkorridor heraus zu gewährleisten, kann das Sicherungselement erfindungsgemäß aus seiner Sicherungsstellung in eine Öffnungsstellung verstellt werden. In der Öffnungsstellung ist der Anfangsquerschnitt und/oder der Endquerschnitt des Förderkorridors durch das jeweilige Sicherungselement nicht versperrt und somit der Transport von Fahrzeugkomponenten mit der Fördereinrichtung ohne Weiteres möglich.

Mit anderen Worten bedeutet dies, dass durch die Verstellung des Sicherungselements aus der Öffnungsstellung in die Sicherungsstellung eine Absturzsicherung im Bereich der Eingabestelle bzw. der Ausgabestelle geschaffen wird. Diese Absturzsicherung kann dann durch die Rückstellung des Sicherungselements aus der Sicherungsstellung in die Öffnungsstellung wieder entfernt werden, um den reibungslosen Materialfluss während des Normalbetriebs der Überflurfördereinrichtung zu gewährleisten.

Um eine letztendlich vollständige Absturzsicherung im Förderkorridor während der Durchführung von Wartungsarbeiten zu gewährleisten, sollte sowohl am Anfangsquerschnitt als auch am Endquerschnitt ein Sicherungselement vorgesehen sein. Durch die Anordnung der beiden Sicherungselemente in ihrer Sicherungsstellung kann dann ein allseitig abgegrenzter, absturzgesicherter Wartungskorridor, dessen Abmaße dem Förderkorridor mit geschlossenem Anfangs- bzw. Endquerschnitt entspricht, geschaffen werden.

Um eine definierte Anordnung des Sicherungselements in der Sicherungsstellung bzw. in der Verriegelungsstellung gewährleisten zu können, ist es besonders vorteilhaft, wenn am Sicherungselement eine Verriegelungseinrichtung vorgesehen ist, mit der das Sicherungselement in der Sicherungsstellung bzw. der Öffnungsstellung arretiert werden kann. Auf diese Weise ist es möglich durch Arretierung des Sicherungselements in der Sicherungsstellung bzw. der Öffnungsstellung einen definierten Betriebszustand im Hinblick auf die Absturzsicherung herzustellen.

Im Hinblick auf die Betriebssicherheit stellt die Lage des Sicherungselements in seiner Sicherungsstellung bzw. seiner Öffnungsstellung eine wichtige Information dar. Beispielsweise können andere Betriebszustände, beispielsweise die Freigabe der Fertigungsanlage oder ein Notstopp, in Abhängigkeit von der Lage des Sicherungselements abhängig gemacht werden. Um die Information der Stellung des Sicherungselements datentechnisch zur Verfügung zu stellen, ist es deshalb besonders vorteilhaft, wenn ein Lagesensor vorgesehen ist, mit dem die Lage des Sicherungselements in der Sicherungsstellung bzw. der Öffnungsstellung mittelbar oder unmittelbar detektiert und als Lagesignal ausgegeben werden kann.

Konstruktiv lässt sich die Realisation eines Lagesensors besonders einfach dadurch gewährleisten, wenn der Lagesensor in die Verriegelungseinrichtung eingebaut ist. Denn in der Verriegelungseinrichtung kann in einfacher Weise für beide Stellungen des Sicherungselements ein jeweils getrennter Verriegelungszustand definiert und mit dem Lagesensor entsprechend detektiert werden.

In welcher Weise die Information des Lagesensors über die Stellung des Sicherungselements weiter verwendet wird, ist grundsätzlich beliebig. Im Hinblick auf die Betriebssicherheit ist es von besonderer Bedeutung, wenn die Fördereinrichtung und/oder die gesamte Überflurfördereinrichtung und/oder Teile einer an der Überflurfördereinrichtung angeordneten Fertigungsanlage in Abhängigkeit vom Lagesignal des Lagesensors stillgelegt werden können. Wird also beispielsweise zur Durchführung von Wartungsarbeiten das Sicherungselement aus seiner Öffnungsstellung in die Sicherungsstellung gebracht, so kann dies durch den Lagesensor festgestellt und davon abhängig die Fördereinrichtung oder die Überflurfördereinrichtung oder eine Fertigungsanlage im Bereich der Fördereinrichtung stillgelegt werden, um Unfälle und Verletzungen des Wartungspersonals durch die Fördereinrichtung bzw. die Überflurfördereinrichtung bzw. die Fertigungsanlage auszuschließen.

Um dem Wartungspersonal die Herstellung der Absturzsicherung am Förderkorridor, insbesondere die Herstellung eines allseitig abgegrenzten, absturzgesicherten Wartungskorridors, zu ermöglichen, bevor es selbst den eigentlichen Gefahrenbereich betritt, ist es besonders vorteilhaft, wenn die Verriegelungseinrichtung mit einer Betätigungseinrichtung zusammenwirkt, durch deren Betätigung die Verriegelungseinrichtung entriegelt werden kann. Im Ergebnis wird dadurch eine Fernsteuerung der Verriegelungseinrichtung durch das Wartungspersonal ermöglicht, so dass eine ferngesteuerte Entriegelung der Verriegelungseinrichtung ermöglicht wird. Nach der Entriegelung der Verriegelungseinrichtung kann dann das Sicherungselement ferngesteuert aus seiner Öffnungsstellung in seine Sicherungsstellung gebracht werden, so dass der Förderkorridor bereits vor Betreten des Förderkorridors durch das Wartungspersonal in einen absturzgesicherten Wartungskorridor umgewandelt wird.

Um eine hohe Störungssicherheit der Fernsteuerung zur Verstellung des Sicherungselements aus der Öffnungsstellung in die Sicherungsstellung zu gewährleisten, ist es besonders vorteilhaft, wenn das Sicherungselement bei Entriegelung der Verriegelungseinrichtung selbsttätig, insbesondere federkraftbetätigt und/oder schwerkraftbetätigt, von der Öffnungsstellung in die Sicherungsstellung verstellt wird. Dies bedeutet mit anderen Worten, dass allein durch Entriegeln der Verriegelungseinrichtung erreicht wird, dass das in der Öffnungsstellung befindliche Sicherungselement automatisch und ohne jeden weiteren gerätetechnischen Eingriff in seine Sicherungsstellung übergeht.

Die konstruktive Ausbildung des Sicherungselements ist grundsätzlich beliebig, solange eine ausreichende Absturzsicherung bei Anordnung des Sicherungselements in seiner Sicherungsstellung gewährleistet ist. Konstruktiv lässt sich das Sicherungselement besonders einfach durch eine Sicherungsschranke realisieren, die zwischen einer Sicherungsstellung und einer Öffnungsstellung verschwenkt werden kann.

Im Hinblick auf den notwendigen Bauraum und den notwendigen Raum zur Verstellung der Sicherungsschranke ist es besonders vorteilhaft, wenn diese mit Gelenken an einer Seite derart gelagert ist, dass die Sicherungsschranke um eine Vertikalachse horizontal verschwenkt werden kann.

Im Hinblick auf die Absturzsicherung ist es weiterhin besonders vorteilhaft, wenn die Sicherungsschranke einen Sicherungszaun bildet, der den Förderkorridor im Bereich der Sicherungsschranke flächig absperrt.

Im Sicherungszaun selbst kann dabei wieder eine Passieröffnung vorgesehen werden, an der der geschlossene Sicherungszaun vom Wartungspersonal passiert werden kann.

Die Passieröffnung selbst im Sicherungszaun kann dabei wiederum mit einer schwenkbar gelagerten Verschlussklappe versperrt werden, um die Absturzsicherung wiederum zu vervollständigen.

Es zeigen:
- Fig. 1: eine erste beispielhafte Überflurfördereinrichtung mit in der Öffnungsstellung angeordneten Sicherungselementen in perspektivischer Ansicht unter Weglassung der Fördereinrichtung;
- Fig. 2: die Überflurfördereinrichtung gemäß Fig. 1 mit in der Sicherungsstellung angeordneten Sicherungselementen in perspektivischer Ansicht;
- Fig. 3: eine zweite beispielhafte Überflurfördereinrichtung mit einem in der Öffnungsstellung angeordneten Sicherungselement in Ansicht von vorne;
- Fig. 4: die Überflurfördereinrichtung gemäß Fig. 3 mit dem in der Sicherungsstellung angeordneten Sicherungselement in Ansicht von vorne.

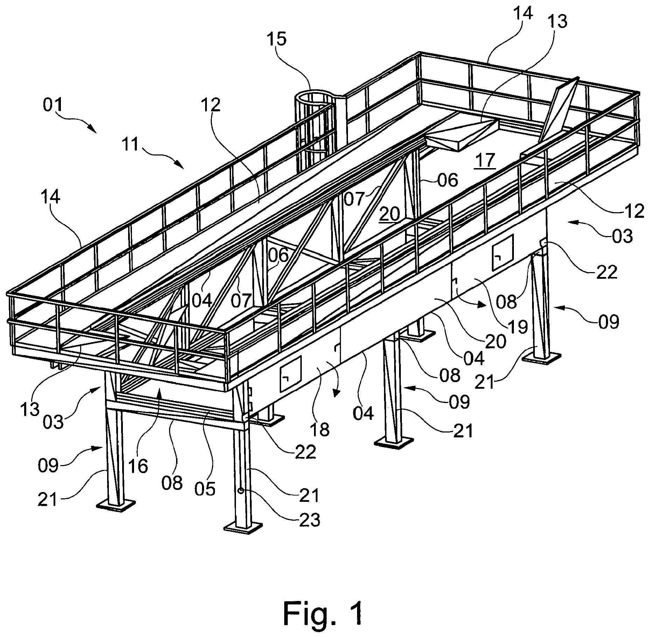

In der **Figur 1** ist eine perspektivische Darstellung einer Überflurfördereinrichtung 01 in beispielhafter Ausführungsform skizziert. Hierbei wurde jedoch auf die Darstellung der zur Überflurfördereinrichtung 01 gehörenden Fördereinrichtung verzichtet. Diese befindet sich, wie der Fachmann leicht nachvollziehen kann, mittig im Traggerüst 03 und steht hierbei je nach Ausführungsform erhaben über dem Traggerüst 03 über.

Das Traggerüst 03 ist in Art eines Fachwerks ausgeführt und umfasst eine Mehrzahl von miteinander verschweißten Tragbalkenelementen 04-07. Das Traggerüst 03 wird von längsgerichteten Tragbalkenelementen 04, quergerichteten Tragbalkenelementen 05, aufrechten Tragbalkenelementen 06 sowie diagonalen Tragbalkenelementen 07 gebildet. Das Traggerüst 03 mit den Tragbalkenelementen 04, 05, 06 und 07 ist hierbei dergestalt ausgeführt, dass mit aufmontierter Fördereinrichtung eine hinreichende selbsttragende Eigensteifigkeit vorhanden ist, so dass ein Transport der gesamten Überflurfördereinrichtung 01 oder zumindest einzelner Traggerüste 03 mit aufmontierter Fördereinrichtung möglich ist. Dazu ist das Traggerüst 03 aus zwei Seitenteilen und einem Bodenteil zusammengebaut. Die Seitenteile und das Bodenteil weisen eine jeweils ebene Bauteilstruktur mit hoher Steifigkeit in der Bauteilebene auf. Die Seitenteilen und das Bodenteil sind aus den Tragbalkenelementen 04, 05, 06 und 07 zusammengesetzt. Das Traggerüst 03 ist hinsichtlich der Steifigkeit, insbesondere Biegesteifigkeit, dahingehend auszulegen, dass sowohl für den Transportfall als auch für die spätere Aufstellung die Lagerung auf den zugehörigen Säulenportalen 09 im Wesentlichen verformungsfrei möglich ist.

Entsprechend der jeweils zu bestimmenden statischen Auslegung der Überflurfördereinrichtung 01 ist das Traggerüst 03 auf einer Mehrzahl von Säulenportalen 09 gelagert. Jedes Säulenportal 09 besteht aus zwei Stützsäulen 21 und einer dazwischen angebrachten Querbrücke 08. Weiterhin ist in diesem Ausführungsbeispiel die Statik des Traggerüsts 03 derart ausgelegt und die Steifigkeit derart gewählt, dass die Stabilität der gesamten Anordnung auch bei Weglassen einzelner Stützsäulen gewährleistet ist. Somit ist es zum einen denkbar, im Aufstellungsfall in der Montageanlage lediglich fünf der dargestellten sechs Stützsäulen 21 einzusetzen oder es ist ebenso möglich, sechs Stützsäulen einzusetzen, wobei im Schadensfall, beispielsweise durch Kollision mit einem Fahrzeug, ein Stützsäulen ohne Einschränkung der Tauglichkeit der Überflurfördereinrichtung ersetzt werden kann.

Weiterhin ist das zur Überflurfördereinrichtung 01 gehörende Wartungsgerüst 11 mit sich beidseitig der Flurfördereinrichtung erstreckenden Wartungsgängen 12 zu erkennen, das an der Oberseite des Traggerüsts 03 angeordnet ist. Diese Wartungsgänge 12 sind endseitig mit Verbindungsträgern 13 verbunden, so dass eine erhöhte Stabilität der gesamten Anordnung mit dem Wartungsgerüst 11 bzw. der Wartungsgänge 12 gegeben ist. Ein umlaufendes Sicherheitsgeländer 14 gewährleistet hierbei die Sicherheit der entsprechenden Wartungspersonen beim Betreten des Wartungsgangs 12. Der Aufgang zum Wartungsgang 12 wird durch Leitern 15 am Wartungsgerüst 11 ermöglicht.

An der Eingabestelle 16 des Traggerüsts 03 können Fahrzeugkomponenten in dem vom Traggerüst 03 gebildeten Förderkorridor eingefördert werden. Diese Fahrzeugkomponenten werden dann von der nicht dargestellten Fördereinrichtung entlang des Förderkorridors 03 zur Ausgabestelle 17 gefördert und können dort beispielsweise von einem Industrieroboter abgenommen werden. Um für die Durchführung von Wartungsarbeiten den Förderkorridor 03 in einen absturzgesicherten Wartungskorridor zu verwandeln ist an der Eingabestelle 16 bzw. an der Ausgabestelle 17 jeweils ein Sicherungselement 18 und 19 vorgesehen. Die Sicherungselemente 18 und 19 sind jeweils in der Art von horizontal verschwenkbaren Sicherungsschranken ausgebildet. In Fig. 1 befinden sich die Sicherungselemente 18 und 19 jeweils in ihrer Öffnungsstellung, so dass der Materialfluss an der Eingabestelle 16 bzw. der Ausgabestelle 17 nicht behindert wird.

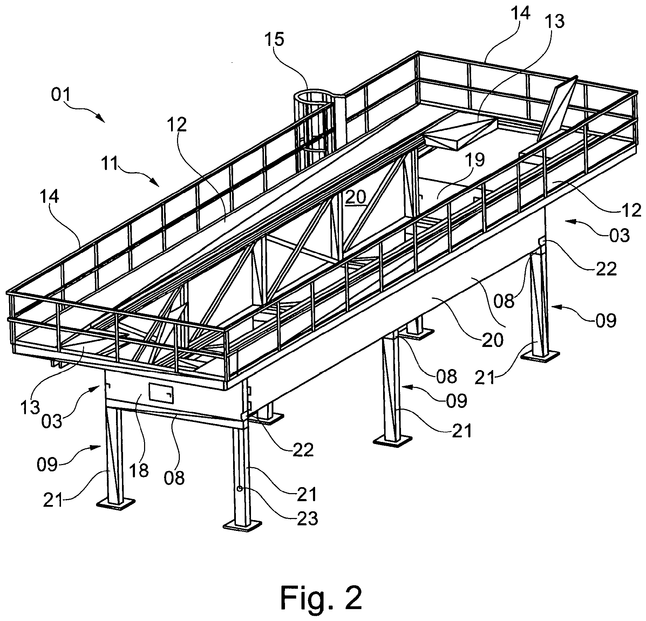

**Figur 2** zeigt die Überflurfördereinrichtung 01 mit den beiden Sicherungselementen 18 und 19 in der jeweiligen Sicherungsstellung. In der Sicherungsstellung der Sicherungselemente 18 und 19 wird der vom Traggerüst 03 gebildete Förderkorridor am Anfangsquerschnitt und am Endquerschnitt verschlossen. Das Traggerüst 03 ist außerdem an den Seitenteilen und am Boden mit Blechplanken 20 beplankt, so dass durch die Anordnung der Sicherungselemente 18 und 19 in ihrer in Fig. 2 dargestellten Sicherungsstellung ein absturzgesicherter Wartungskorridor entsteht, der sich großen- und formgleich entlang des vom Traggerüst 03 gebildeten Förderkorridors erstreckt. Dies bedeutet mit anderen Worten, dass das Wartungspersonal bei Betreten des vom Traggerüst 03 gebildeten Förderkorridors keiner durch Absturz verursachten Unfallgefahr ausgesetzt ist, sobald die Sicherungselemente 18 und 19 in ihrer in Fig. 2 dargestellten Sicherungsstellung angeordnet werden.

Zur Arretierung der Sicherungselemente 18 und 19 in der Öffnungsstellung und der Sicherungsstellung sind im Bereich der Vertikallagerachsen jeweils Verriegelungseinrichtungen 22 vorgesehen. Diese Verriegelungseinrichtungen 22 können mit einem Schalter 23, der vom Hallenboden aus erreichbar ist, ferngesteuert und somit entriegelt werden. Die Lagerachsen der Sicherungselemente 18 und 19 sind dabei so angeordnet, dass die Sicherungselemente 18 und 19 nach der Entriegelung der Verriegelungseinrichtungen 22 schwerkraftbetätigt automatisch aus der in Fig. 1 dargestellten Öffnungsstellung in die in Fig. 2 dargestellte Verriegelungsstellungen verschwenken.

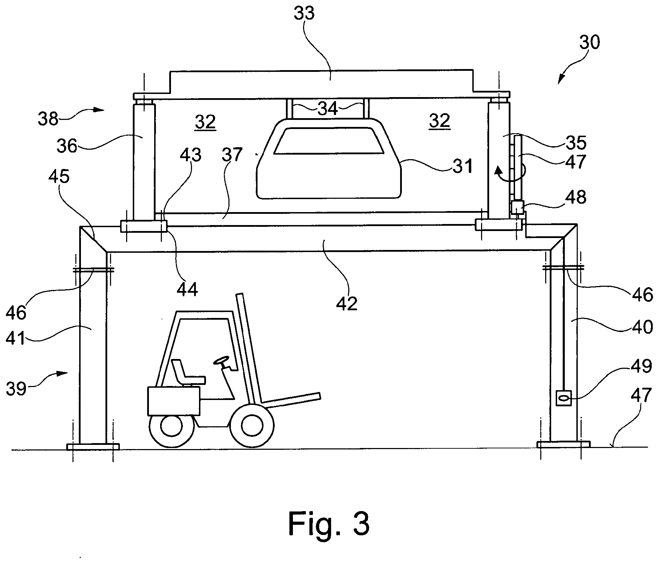

**Figur 3** zeigt eine zweite Überflurfördereinrichtung 30 in Ansicht von vorne. Die Überflurfördereinrichtung 30 ist zum Transport von Fahrzeugkomponenten 31 entlang eines Förderkorridors 32 vorgesehen. Die eigentliche Förderbewegung zum Transport der Fahrzeugkomponenten 31 wird dabei durch eine Fördereinrichtung 33, beispielsweise einem Schubförderer, aufgebracht. Die Fördereinrichtung 33 ist mit Kopplungsorganen 34 an den Fahrzeugkomponenten 31 befestigt. Die Fördereinrichtung 33 ihrerseits ist an den Seiten an zwei Seitenteilen 35 und 36 aufgelegt und befestigt. Die Seitenteile 35 und 36 werden unterhalb des Förderkorridors 32 durch ein Bodenteil 37 miteinander verbunden. Die beiden Seitenteile 35 und 36 und das Bodenteil 37 bilden gemeinsam ein Traggerüst 38, das eine U-förmige Rinnenform aufweist und den Förderkorridor 32 jeweils seitlich und von unten begrenzt.

Das Traggerüst 38 ist selbsttragend ausgeführt. Und kann in vormontierter Form von einem Herstellungsort zum Verwendungsort transportiert werden. Das selbsttragend ausgeführte Traggerüst 38 wird zur Herstellung der Überflurfördereinrichtung 30 von oben auf mehrere hintereinander angeordnete Säulenportale 39 aufgelegt und befestigt. Jedes Säulenportal besteht aus zwei Stützsäulen 40 und 41 und einer zwischen den beiden Stützsäulen 40 und 41 angebrachten Querbrücke 42. An den unteren Enden der Seitenteile 35 und 36 und an der Oberseite der Querbrücke 42 sind jeweils Befestigungslaschen 43 und 44 vorgesehen, die eine Ausrichtung des Traggerüsts 38 auf den Säulenportalen 39 und eine anschließende Fixierung ermöglichen. Die Stützsäulen 40 und 41 sowie die Querbrücke 42 sind aus rechteckförmigen Rohren hergestellt und weisen an ihren aneinanderliegenden Enden jeweils einen Gehrungsschnitt auf, so dass die Endquerschnitte der beiden Stützsäulen flächenbündig auf den Endquerschnitten der Querbrücke zur Anlage kommen. Zur Verbindung der Stützsäulen 40 und 41 und der Querbrücke 42 sind die auf Gehrung geschnittenen Endquerschnitte mit Schweißnähten 45 miteinander verschweißt.

Um die Säulenportale auf geringem Transportraum transportieren zu können, können die beiden Stützsäulen in zwei Teile zerlegt werden. Dazu sind an den Stützsäulen 40 und 41 jeweils Verbindungsstellen 46 vorgesehen, in denen die Stützsäulen 40 und 41 in zwei Teile zerlegt werden können.

In Fig. 3 ist ein Sicherungselement 47 in seiner Öffnungsstellung dargestellt. Das Sicherungselement 47 kann mit einer Verriegelungseinrichtung 48 in der in Fig. 3 dargestellten Öffnungsstellung arretiert werden. Durch Betätigung eines Schalters 49 kann die Verriegelungseinrichtung 48 ferngesteuert entriegelt werden.

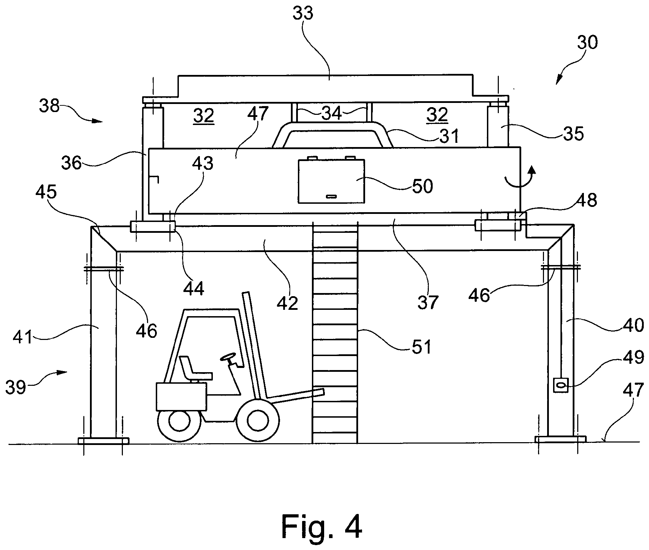

**Figur 4** zeigt die Überflurfördereinrichtung 30 nach Entriegelung der Verriegelungseinrichtung 48. Das Sicherungselement 47 schwenkt nach Entriegelung der Verriegelungseinrichtung 48 schwerkraftbetätigt und somit automatisch in die in Fig. 4 dargestellte Sicherungsstellung und versperrt den Förderkorridor 32. Nach Erreichen der Sicherungsstellung kann das Sicherungselement 47 mit der Verriegelungseinrichtung 48 wiederum arretiert werden. In der Verriegelungseinrichtung 48 ist dabei ein Lagesensor eingebaut, der die Verriegelung des Sicherungselements 47 in der in Fig. 4 dargestellten Sicherungsstellung detektieren kann. Diese Information wird an die Steuerung der Überflurfördereinrichtung 30 weitergeleitet, um die Fördereinrichtung 33 zu stoppen und Kollisionen der Fahrzeugkomponenten 31 mit dem Sicherungselement 47 auszuschließen. Nach Herstellung der Absturzsicherung im Förderkorridor 32 kann das Wartungspersonal eine Leiter 48 an die Überflurfördereinrichtung 30 anstellen und den nunmehr in einen Wartungskorridor umgewandelten Förderkorridor 32 betreten. Dazu ist in dem Sicherungselement 37 eine Passieröffnung vorgesehen, die mit einer verschwenkbar gelagerten Verschlussklappe 50 verschlossen ist. Zum Betreten des Förderkorridors 32 kann das Wartungspersonal nach Besteigen der Leiter 51 die Verschlussklappe 50 öffnen und den Förderkorridor durch die dahinter liegende Passieröffnung durch das Sicherungselement 47 hindurch betreten.

## Patentansprüche

1. Überflurfördereinrichtung (01, 30) zur Integration in einer Montageanlage zum Transport von Fahrzeugkomponenten (31) mittels einer auf der Überflurfördereinrichtung (01, 30) angeordneten Fördereinrichtung (33), mit einem Traggerüst (03, 38), wobei das Traggerüst (03, 38) eine Länge von mehr als 5 m und eine Breite von mehr als 2 m aufweist, und wobei die Fördereinrichtung (33) am Traggerüst (03, 38) montierbar ist, und wobei Traggerüst (03, 38) und Fördereinrichtung (03) einen Förderkorridor (32) bilden, in dem die Fahrzeugkomponenten (31) von einer Eingabestelle (16) zu einer Ausgabestelle (17) transportiert werden können, und wobei das Traggerüst (03, 38) mit Lagerungsmitteln (09, 39) auf dem Boden (47) der Montageanlage gelagert ist, und wobei durch die Lagerungsmittel (09, 39) zwischen der Unterseite des Traggerüsts (03, 38) und der Oberseite des Bodens (47) ein zur Bauteilmontage und/oder zum Bauteiltransport geeigneter, begehbarer und/oder befahrbarer Freiraum gebildet wird,
**dadurch gekennzeichnet,**
**dass** an der Eingabestelle (16) und/oder Ausgabestelle (17) des Traggerüsts (03, 38) zumindest ein Sicherungselement (18, 19; 47) angeordnet ist, wobei das Sicherungselement (18, 19; 47) zwischen einer Sicherungsstellung und einer Öffnungsstellung verstellt werden kann, und wobei das Sicherungselement (18, 19; 47) in seiner Sicherungsstellung als Absturzsicherung wirkt und den Anfangsquerschnitt und/oder Endquerschnitt des Förderkorridors (32) zumindest teilweise versperrt, und wobei das Sicherungselement (18, 19; 47) in seiner Öffnungsstellung den Anfangsquerschnitt und/oder Endquerschnitt des Förderkorridors (32) für den Transport von Fahrzeugkomponenten (31) mit der Fördereinrichtung (33) freigibt.

2. Überflurfördereinrichtung nach Anspruch 1,
**dadurch gekennzeichnet,**
**dass** durch Anordnung der Sicherungselemente (18, 19; 47) am Anfangsquerschnitt und Endquerschnitt des Förderkorridors (32) in der jeweiligen Sicherungsstellung ein allseitig abgegrenzter, absturzgesicherter Wartungskorridor gebildet wird.

3. Überflurfördereinrichtung nach Anspruch 1 oder 2,
**dadurch gekennzeichnet,**
**dass** das Sicherungselement (18, 19; 47) mit einer Verriegelungseinrichtung (22, 48) in der Sicherungsstellung und/oder der Öffnungsstellung arretiert werden kann.

4. Überflurfördereinrichtung nach einem der Ansprüche 1 bis 3,
**dadurch gekennzeichnet,**
**dass** ein Lagesensor vorgesehen ist, mit dem die Lage des Sicherungselement in der Sicherungsstellung und/oder der Öffnungsstellung mittelbar oder unmittelbar detektiert und als Lagesignal ausgegeben werden kann.

5. Überflurfördereinrichtung nach Anspruch 4,
**dadurch gekennzeichnet,**
**dass** der Lagesensor in der Verriegelungseinrichtung (22, 48) integriert ist.

6. Überflurfördereinrichtung nach einem der Ansprüche 1 bis 5,
**dadurch gekennzeichnet,**
**dass** die Fördereinrichtung (33) und/oder die gesamte Überflurfördereinrichtung (01, 30) und/oder Teile einer an der Überflurfördereinrichtung (01, 30) angeordneten Fertigungsanlage in Abhängigkeit vom Lagesignal des Lagesensors stillgelegt werden können.

7. Überflurfördereinrichtung nach einem der Ansprüche 1 bis 6,
**dadurch gekennzeichnet,**
**dass** das Sicherungselement (18, 19; 47) ferngesteuert aus der Öffnungsstellung in die Sicherungsstellung verstellt werden kann.

8. Überflurfördereinrichtung nach einem der Ansprüche 3 bis 7,
**dadurch gekennzeichnet,**
**dass** die Verriegelungseinrichtung (22, 48) mit einer Betätigungseinrichtung (23, 49) zusammenwirkt, durch deren Betätigung die Verriegelungseinrichtung (22, 48) entriegelt werden kann.

9. Überflurfördereinrichtung nach einem der Ansprüche 3 bis 8,
**dadurch gekennzeichnet,**
**dass** das Sicherungselement (18, 19; 47) bei Entriegelung der Verriegelungseinrichtung (22, 48) selbsttätig, insbesondere federkraftbetätigt und/oder schwerkraftbetätigt, von der Öffnungsstellung in die Sicherungsstellung verstellt wird.

10. Überflurfördereinrichtung nach einem der Ansprüche 1 bis 9,
**dadurch gekennzeichnet,**
**dass** das Sicherungselement (18, 19; 47) in der Art einer Sicherungsschranke ausgebildet ist.

11. Überflurfördereinrichtung nach Anspruch 10,
**dadurch gekennzeichnet,**
**dass** die Sicherungsschranke (18, 19; 47) horizontal verschwenkbar gelagert ist.

12. Überflurfördereinrichtung nach Anspruch 10 oder 11,
**dadurch gekennzeichnet,**
**dass** die Sicherungsschranke (18, 19; 47) einen Sicherungszaun bildet, der den Förderkorridor (32) flächig versperrt.

13. Überflurfördereinrichtung nach Anspruch 12,
**dadurch gekennzeichnet,**
**dass** der Sicherungszaun (18, 19; 47) eine Passieröffnung aufweist, an der der geschlossene Sicherungszaun vom Wartungspersonal passiert werden kann.

14. Überflurfördereinrichtung nach Anspruch 13,
**dadurch gekennzeichnet,**
**dass** die Passieröffnung im Sicherungszaun (18, 19; 47) mit einer schwenkbar gelagerten Verschlussklappe (50) versperrt werden kann.

## Claims

1. An overhead conveying device (01, 30) for integration in an assembly plant in order to transport vehicle components (31) by means of a conveying device (33) arranged on the overhead conveying device (01, 30), said overhead conveying device having a supporting framework (03, 38), wherein the supporting framework (03, 38) has a length greater than 5 m and a width greater than 2 m, and wherein the conveying device (33) can be mounted at the supporting framework (03, 38), and wherein the supporting framework (03, 38) and the conveying device (33) form a conveying corridor (32), in which the vehicle components (31) can be transported from an input point (16) to an output point (17), and wherein the supporting framework (03, 38) is borne on the floor (47) of the assembly plant by bearing means (09, 39), and wherein a free space, which is suitable for component assembly and/or for component transport and which can be walked and/or driven through, is formed between the underside of the supporting framework (03, 38) and the upper side of the floor (47) by the bearing means (09, 39),
**characterised in that**
at least one securing element (18, 19; 47) is arranged at the input point (16) and/or output point (17) of the supporting framework (03, 38), wherein the securing element (18, 19; 47) can be moved between a securing position and an opening position, and wherein the securing element (18, 19; 47) functions in its securing position as fall protection and at least partially blocks the initial cross-section and/or terminal cross-section of the conveying corridor (32), and wherein, in its opening position, the securing element (18, 19; 47) releases the initial cross-section and/or terminal cross-section of the conveying corridor (32) for the transport of vehicle components (31) with the help of the conveying device (33).

2. The overhead conveying device according to claim 1,
**characterised in that**
a maintenance corridor, which is delimited on all sides and fall-protected, is formed by arranging the securing elements (18, 19; 47) at the initial cross-section and terminal cross-section of the conveying corridor (32) in the respective securing position.

3. The overhead conveying device according to claim 1 or 2,
**characterised in that**
the securing element (18, 19; 47) may be arrested in the securing position and/or in the opening position with the help of a locking device (22, 48).

4. The overhead conveying device according to any one of the claims 1 to 3,
**characterised in that**
a position sensor is disposed, with the help of which the position of the securing element in the securing position and/or in the opening position can be indirectly or directly detected and can be output as a position signal.

5. The overhead conveying device according to claim 4,
**characterised in that**
the position sensor is integrated in the locking device (22, 48).

6. The overhead conveying device according to any one of the claims 1 to 5,
**characterised in that**
the conveying device (33) and/or the entire overhead conveying device (01, 30) and/or parts of a production plant arranged at the overhead conveying device (01, 30) can be shut down as a function of the position signal of the position sensor.

7. The overhead conveying device according to any one of the claims 1 to 6,
**characterised in that**
the securing element (18, 19; 47) can be moved from the opening position into the securing position by remote control.

8. The overhead conveying device according to any one of the claims 3 to 7,
**characterised in that**
the locking device (22, 48) interacts with an actuating device (23, 49), by the actuation of which the locking device (22, 48) can be unlocked.

9. The overhead conveying device according to any one of the claims 3 to 8,
**characterised in that,**
when the locking device (22, 48) is unlocked, the securing element (18, 19; 47) is automatically moved from the opening position into the securing position, in particular being actuated by spring force and/or by gravity.

10. The overhead conveying device according to any one of the claims 1 to 9,
**characterised in that**
the securing element (18, 19; 47) is embodied in the manner of a safety barrier.

11. The overhead conveying device according to claim 10,
**characterised in that**
the safety barrier (18, 19; 47) is borne so as to be horizontally pivotable.

12. The overhead conveying device according to claim 10 or 11,
**characterised in that**
the safety barrier (18, 19; 47) forms a safety fence, which blocks the entire area of the conveying corridor (32).

13. The overhead conveying device according to claim 12,
**characterised in that**
the safety fence (18, 19; 47) has a passage opening, at which maintenance workers can pass the closed safety fence.

14. The overhead conveying device according to claim 13,
**characterised in that**
the passage opening in the safety fence (18, 19; 47) can be blocked with the help of a closing cover (50) that is pivotably borne.

## Revendications

1. Dispositif (01, 30) de convoyeur aérien pour être intégré dans une usine d'assemblage pour transporter des composants (31) de véhicule au moyen d'un dispositif (33) de convoyeur qui est disposé sur le dispositif (01, 30) de convoyeur aérien, ledit dispositif de convoyeur aérien comprenant un cadre (03, 38) de support, ledit cadre (03, 38) de support ayant une longueur de plus de 5 m et une largeur de plus de 2 m, et ledit dispositif (33) de convoyeur pouvant être monté sur le cadre (03, 38) de support, et ledit cadre (03, 38) de support et ledit dispositif (33) de convoyeur formant un couloir (32) de convoyeur dans lequel les composants (31) de véhicule peuvent être transportés d'un point d'entrée (16) vers un point de sortie (17), et ledit cadre (03, 38) de support étant monté sur le fond (47) de l'usine d'assemblage par des moyens (09, 39) d'appui, et lesdits moyens (09, 39) d'appui occasionnant la formation, entre le côté inférieur du cadre (03, 38) de support et le côté supérieur du fond (47), d'un espace libre qui est approprié pour l'assemblage des composants et/ou pour le transport des composants et qui est accessible à pied et/ou par véhicule,
**caractérisé en ce qu'**
au moins un élément (18, 19 ; 47) de sécurité est disposé au point d'entrée (16) et/ou au point de sortie (17) du cadre (03, 38) de support, ledit élément (18, 19 ; 47) de sécurité pouvant être déplacé entre une position de sécurité et une position ouverte, et ledit élément (18, 19 ; 47) de sécurité agissant, dans sa position de sécurité, comme une sécurité anti-chute et bloquant la coupe transversale initiale et/ou la coupe transversale finale du couloir (32) de convoyeur au moins en partie, et ledit élément (18, 19 ; 47) de sécurité, dans sa position ouverte, débloquant la coupe transversale initiale et/ou la coupe transversale finale du couloir (32) de convoyeur pour le transport de composants (31) de véhicule par le dispositif (33) de convoyeur.

2. Dispositif de convoyeur aérien selon la revendication 1,
**caractérisé en ce qu'**
un couloir de service anti-chute qui est délimité de tous les côtés est formé en disposant les éléments (18, 19 ; 47) de sécurité à la coupe transversale initiale et à la coupe transversale finale du couloir (32) de convoyeur dans la position de sécurité respective.

3. Dispositif de convoyeur aérien selon la revendication 1 ou 2,
**caractérisé en ce que**
l'élément (18, 19 ; 47) de sécurité peut être arrêté dans la position de sécurité et/ou dans la position ouverte par un dispositif (22, 48) de verrouillage.

4. Dispositif de convoyeur aérien selon l'une quelconque des revendications 1 à 3,
**caractérisé en ce qu'**
un capteur de position est prévu par lequel la position de l'élément de sécurité dans la position de sécurité et/ou dans la position ouverte peut être détectée indirectement ou directement et peut être émise comme un signal de position.

5. Dispositif de convoyeur aérien selon la revendication 4,
**caractérisé en ce que**
le capteur de position est intégré dans le dispositif (22, 48) de verrouillage.

6. Dispositif de convoyeur aérien selon l'une quelconque des revendications 1 à 5,
**caractérisé en ce que**
le dispositif (33) de convoyeur et/ou le dispositif (01, 30) de convoyeur aérien entier et/ou des parties d'une usine de production disposée au dispositif (01, 30) de convoyeur aérien peut/peuvent être arrêté(s) en fonction du signal de position du capteur de position.

7. Dispositif de convoyeur aérien selon l'une quelconque des revendications 1 à 6,
**caractérisé en ce que**
l'élément (18, 19 ; 47) de sécurité peut être déplacé de la position ouverte à la position de sécurité de manière télécommandée.

8. Dispositif de convoyeur aérien selon l'une quelconque des revendications 3 à 7,
**caractérisé en ce que**
le dispositif (22, 48) de verrouillage coopère avec un dispositif (23, 49) d'actionnement, l'actionnement dudit dispositif d'actionnement permettant le déverrouillage du dispositif (22, 48) de verrouillage.

9. Dispositif de convoyeur aérien selon l'une quelconque des revendications 3 à 8,
**caractérisé en ce que,**
quand le dispositif (22, 48) de verrouillage est déverrouillé, l'élément (18, 19 ; 47) de sécurité est déplacé de la position ouverte à la position de sécurité automatiquement, en particulier étant actionné par un ressort et/ou par gravité.

10. Dispositif de convoyeur aérien selon l'une quelconque des revendications 1 à 9,
**caractérisé en ce que**
l'élément (18, 19 ; 47) de sécurité est conçu à la manière d'une barrière de sécurité.

11. Dispositif de convoyeur aérien selon la revendication 10,
**caractérisé en ce que**
la barrière (18, 19 ; 47) de sécurité est montée de manière à être pivotable horizontalement.

12. Dispositif de convoyeur aérien selon la revendication 10 ou 11,
**caractérisé en ce que**
la barrière (18, 19 ; 47) de sécurité forme une clôture de sécurité qui bloque la région entière du couloir (32) de convoyeur.

13. Dispositif de convoyeur aérien selon la revendication 12,
**caractérisé en ce que**
la clôture (18, 19 ; 47) de sécurité présente une ouverture de passage à laquelle le personnel de maintenance peut passer la clôture de sécurité fermée.

14. Dispositif de convoyeur aérien selon la revendication 13,
**caractérisé en ce que**
l'ouverture de passage dans la clôture (18, 19 ; 47) de sécurité peut être bloquée par un volet de fermeture (50) qui est monté de manière pivotable.
